# EUROPÄISCHE PATENTSCHRIFT

(11) **EP 3 834 919 B1**
(45) Veröffentlichungstag und Bekanntmachung des Hinweises auf die Patenterteilung: **19.10.2022**
(21) Anmeldenummer: 20213284.1
(22) Anmeldetag: 11.12.2020
(51) Int. Cl.: B01D 61/08, C02F 1/44, F04B 9/14, C02F 1/00

(54) **WASSERFILTRATIONSVORRICHTUNG**
WATER FILTRATION DEVICE
DISPOSITIF DE FILTRATION D'EAU

(30) Priorität: 11.12.2019 AT 3932019
(43) Veröffentlichungstag der Anmeldung: 16.06.2021
(73) Patentinhaber: Technische Universität Wien, 1040 Wien (AT)
(72) Erfinder: GFÖHLER, Margit, 1230 Wien (AT); HARASEK, Michael, 1160 Wien (AT)
(74) Vertreter: Ellmeyer, Wolfgang

(56) Entgegenhaltungen:
- WO-A1-2018/037433
- GB-A- 2 471 499
- GB-A- 2 502 733
- GB-A- 2 524 066
- JP-A- 2007 301 485
- US-B1- 6 641 729

## Beschreibung

Die vorliegende Erfindung betrifft eine Wasserfiltrationsvorrichtung, die eine auf Umkehrosmose-Membrantrennung basierende, mittels einer Verdrängerpumpe betreibbare Filtrationseinheit umfasst, die mit Muskelkraft antreibbar ist.

### STAND DER TECHNIK

Mit Muskelkraft antreibbare, auf Umkehrosmose-Membrantrennung basierende Wasserfiltrationssysteme, die unter anderem oder auch vorwiegend zur Entsalzung, z. B. von Brack- oder Meerwasser, einsetzbar sind, sind aus dem Stand der Technik bekannt. So offenbaren etwa GB 2.471.499 A und GB 2.502.733 A Systeme, bei denen im Wesentlichen ein Fahrradrahmen ohne Vorderrad positionsfest auf einem Gestell montiert ist, wobei das als Schwungrad ohne Bodenkontakt ausgeführte Hinterrad über ein Kettengetriebe antreibbar ist, das über die Fahrradkette mit dem vorderen Kettenblatt verbunden ist, das auf übliche Weise mittels Tretkurbel und Pedalen mit Muskelkraft angetrieben wird. Das Schwungrad, das vorzugsweise als mit Wasser oder Sand füllbarer Hohlkörper ausgeführt ist, ist über ein oder zwei weitere Kettengetriebe mit einer oder zwei Pumpen verbunden, die als Kolben-, Zentrifugal- oder Membranpumpen ausgeführt sein können, wovon eine das zu reinigende Wasser durch eine Umkehrosmose-Filtrationseinheit und die zweite, optionale Pumpe das Wasser durch ein vorgeschaltetes Vorbehandlungsfilter pumpt, bevor es über einen Pufferbehälter zur Umkehrosmose weiterbefördert wird. In bevorzugten Ausführungsformen sind auf dem Gestell zwei identische Fahrradrahmen parallel angeordnet, so dass zwei Personen dasselbe Schwungrad antreiben können. Das Übersetzungsverhältnis zwischen den Zahnrädern des Kettenblatts, am Schwungrad und an dem oder den weiteren Kettengetriebe(n) wird durch geeignete Auswahl der Zahnradgrößen vorzugsweise so eingestellt, dass bei 50 bis 60 U/min der Tretkurbel das Schwungrad mit etwa 170 U/min und die Pumpachse(n) mit 300 bis 400 U/min rotieren.

Nachteilig ist an diesen Ausführungsformen vor allem, dass es sich dabei um ein stationäres System mit erheblichem Platzbedarf handelt, das nur unter beträchtlichem Aufwand an einen anderen Ort befördert werden kann, da es in dieser Form nur mittels Lkw transportabel ist - oder aber in seine Einzelteile zerlegt werden muss, um auch mit einem kleineren Gefährt, z. B. einem Kombi-Pkw, transportiert werden zu können. Dazu kommt, dass das Übersetzungsverhältnis nur durch Austausch eines oder mehrerer der Zahnräder veränderbar ist.

In GB 2.524.066 A wird eine alternative Art des Betriebs eines Wasserfiltrationssystems offenbart, bei der ein handelsübliches Fahrrad mit einer Vorrichtung verbunden wird, die einen Rahmen samt Befestigungsmitteln zur Aufhängung der Fahrrad-Hinterachse auf der Vorrichtung, eine an die Vorrichtung anschließbare Pumpe zum Pumpen von zu filtrierendem Wasser durch eine oder zwei mit der Vorrichtung verbindbare Filterpatronen, sowie eine Eingriffseinheit zur Herstellung einer Verbindung zwischen dem Hinterrad des Fahrrads und der Pumpe umfasst. Da heißt, das Fahrrad wird mit der Vorrichtung auf solche Weise verbunden, dass seine Hinterachse keinen Bodenkontakt mehr aufweist, um ein Bewegen des Fahrrads beim Treten der Pedale zu verhindern, aber in Kontakt mit der Eingriffseinheit steht, bei der es sich vorzugsweise um eine Walze handelt. Bei Treten der Pedale nach dem Aufhängen der Fahrrad-Hinterachse versetzt die Rotation des Hinterrads die Walze ebenfalls in Rotation, wodurch die Pumpe angetrieben wird, die aus einer ganzen Reihe verschiedener Pumpen ausgewählt sein kann - wie auch die Filter aus einer langen Liste auswählbar sind, wobei bei Vorliegen zweier in Serie geschalteter Filter der zweite vorzugsweise ein Aktivkohlefilter ist.

An dieser Ausführungsform kann zwar das Fahrrad ein handelsübliches Fahrrad sein und ist daher mobil. Allerdings sind in diesem Dokument keinerlei Vorkehrungen getroffen, die Vorrichtung gemäß der dortigen Erfindung zusammen mit dem Fahrrad transportieren zu können. Im Gegenteil, die Vorrichtung kann offenbar nur in ihre Einzelteile zerlegt transportiert werden. Das bedeutet, dass vor Beginn des Pumpvorgangs eigens das Fahrrad in den Rahmen der Vorrichtung eingespannt und mit dem Eingriffsmittel verbunden werden muss, die Vorrichtung mit der Pumpe verbunden und eine Filterpatrone in die Vorrichtung eingesetzt werden müssen, wie dies in Fig. 7 von GB 2.524.066 A angegeben ist. Dies stellt einen nicht zu vernachlässigenden Aufwand vor dem eigentlichen Pumpvorgang dar. Weiters ist der über einen Walzenantrieb erzeugbare Pumpendruck - der darin nicht näher spezifiziert, sondern nur als "vorbestimmter Druck" bezeichnet wird - naturgemäß gering und würde beispielsweise für eine Umkehrosmose-Membranfiltrationseinheit, für die Drücke im Bereich von mehreren Dutzend bar erforderlich sind, keinesfalls ausreichen. Dies rührt daher, dass die Walze lediglich durch Verschwenken eines "Stellmittels" an das Hinterrad angedrückt wird, wobei davon auszugehen ist, dass zumindest bei höheren Umdrehungszahlen kein dauerhafter Kontakt zwischen Hinterrad und Walze möglich ist.

US6641729 B1 offenbart ein mobiles Wasserbehandlungsgerät, bei der eine Umkehrosmoseeinheit über einen zusätzlichen Kettenantrieb angetrieben wird. Dabei ist dieser Kettenantrieb mit dem Ritzelpaket eines Fahrrads verbunden und durch einen Schaltmechanismus auf dem Gepäckträger ist die ebenfalls dort installierte mobile Umkehrosmoseeinheit mit dem zusätzlichen Kettenantrieb verbindbar.

Ziel der Erfindung war vor diesem Hintergrund die Entwicklung einer mit Muskelkraft betreibbaren Wasserfiltrationsvorrichtung, mit der die obigen Nachteile zumindest teilweise vermieden werden.

### ZUSAMMENFASSUNG DER ERFINDUNG

Dieses Ziel erreicht die vorliegende Erfindung durch Bereitstellung einer Wasserfiltrationsvorrichtung, umfassend eine auf Umkehrosmose-Membrantrennung basierende, mittels einer Verdrängerpumpe betreibbare Filtrationseinheit, die ein Einlassventil für zu filtrierendes Wasser, ein Auslassventil für filtriertes Permeatwasser und ein Auslassventil für Retentat-Abwasser umfasst, sowie ein Kettengetriebe zum Antrieb der Verdrängerpumpe, das an einem Fahrradrahmen montiert und über eine Kette und eine Pedale umfassende Kettenblattgarnitur mit Muskelkraft betreibbar ist, wobei die Wasserfiltrationsvorrichtung dadurch gekennzeichnet ist, dass:
i) das Kettengetriebe, die Kette, die Kettenblattgarnitur samt Pedalen und der Fahrradrahmen Bestandteile eines vollständigen, funktionsfähigen Fahrrads sind;
ii) das Kettengetriebe ein reines Kettengetriebe oder eine Kombination aus Ketten- und Riemengetriebe ist und über ein weiteres Ketten- oder Riemengetriebe mit der Verdrängerpumpe verbunden ist;
iii) das Kettengetriebe zumindest ein Schaltwerk umfasst, mittels dessen die Fahrradkette zwischen zumindest zwei Ritzeln umschaltbar ist, wovon
   zumindest ein Ritzel, das gegebenenfalls Teil eines Ritzelpakets ist, mit der Hinterradnabe des Fahrrads fest verbunden ist und zum Antrieb des Fahrrad-Hinterrads bestimmt ist und
   zumindest ein Ritzel Teil eines, gegebenenfalls weiteren, Ritzelpakets ist, das auf einer frei rotierbar auf der Radnabe gelagerten Buchse aufsitzt und das zumindest ein weiteres Ritzel oder eine Riemenscheibe umfasst, das bzw. die über eine weitere Kette oder einen Riemen mit einem Ritzel oder einer Riemenscheibe des Ketten- oder Riemengetriebes verbunden ist und zum Antrieb der Verdrängerpumpe bestimmt ist; und
iv) die Filtrationseinheit mit dem Fahrrad fest, aber vorzugsweise lösbar, verbunden und damit zusammen beweglich ist, wodurch die Wasserfiltrationsvorrichtung als Ganzes mobil ist

Die vorliegende Erfindung löst auf diese Weise sämtliche der eingangs beschriebenen Nachteile des Standes der Technik: Das zum Antrieb der Filtrationseinheit vorgesehene Fahrrad ist voll funktionsfähig, die Filtrationseinheit ist fest mit dem Fahrrad verbunden und der Antrieb über die Kettenblattgarnitur ist am Hinterrad mittels eines Schaltwerks zwischen Fahrbetrieb und Standbetrieb, d. h. Pumpbetrieb, variabel. AII dies ergibt eine vollständig mobile Wasserfiltrationsvorrichtung, die ohne jegliche Montage- oder Umbauarbeiten jederzeit einsetzbar ist, sobald die Pumpe mit einem Reservoir an zu reinigendem Wasser verbunden ist.

Die oben beschriebene einfachste Ausführungsform der erfindungsgemäßen Wasserfiltrationsvorrichtung stellt darüber hinaus die Grundlage für einen weiteren, enormen Vorteil der vorliegenden Erfindung dar: In einer bevorzugten Ausführungsform der Erfindung, bei der zwischen den beiden Getrieben zwei Antriebsketten, d. h. eine zur Kettenblattgarnitur und eine zur Pumpe, vorgesehen sind, die beide mittels Schaltwerk zwischen Fahrbetrieb und Standbetrieb umschaltbar sind, ist die erfindungsgemäße Wasserfiltrationsvorrichtung nämlich sogar während der Fahrt betreibbar, worauf in der Folge noch näher eingegangen wird.

Die Art der Pumpe ist gemäß vorliegender Erfindung nicht speziell eingeschränkt, solange sie in der Lage ist, den erforderlichen Druck für die Umkehrosmose-Membrantrennung bereitzustellen. Dafür kommen beispielsweise Flügelzellen- oder Drehschieberpumpen, Zahnradpumpen, Axialkolbenpumpen, Radialkolbenpumpen und Hubkolbenpumpen in Frage. In bevorzugten Ausführungsformen der Erfindung ist die Verdrängerpumpe jedoch eine hydraulische Hubkolbenpumpe mit zumindest einem Kolben, die über ein Schubkurbelgetriebe oder einen Kurbeltrieb als weiteres Ketten- oder Riemengetriebe mit dem Kettengetriebe verbunden ist, da auf diese Weise eine effiziente Kraftübertragung von der Tretkurbel des Fahrrads auf die Filtrationseinheit gewährleistet ist.

Ebendiese Kraftübertragung ist nicht auf den Einsatz von reinen Kettengetrieben eingeschränkt. Das bedeutet, dass jegliche Kraftübertragung in der Wasserfiltrationsvorrichtung der vorliegenden Erfindung sowohl über Ketten als auch über Riemen und gegebenenfalls Riemenscheiben anstelle von Zahnrädern oder Ritzeln erfolgen kann - theoretisch sogar die Übertragung der Muskelkraft über die Pedale der Tretkurbel auf die Hinterradnabe des Fahrrads. Da jedoch in Fällen, bei denen diese Kraftübertragung auf das Hinterrad mittels Riemen erfolgt, keine herkömmliche Fahrradkonstruktion als Grundlage für die erfindungsgemäße Wasserfiltrationsvorrichtung verwendet werden könnte, werden hierin nur Ausführungsformen näher beschrieben, bei denen der Antrieb des Hinterrads über eine übliche Antriebskette, eine Kettenblattgarnitur und ein Kettengetriebe erfolgt.

Die Kraftübertragung zum Antrieb der Pumpe über das Ketten- und das weitere Getriebe kann jedoch sowohl mittels einer weiteren Kette und eines Ritzels als auch mittels eines Riemens, z. B. eines Zahnriemens, Keilriemens oder auch Flachriemens, und - je nach Art des Riemens - ebenfalls eines Ritzels oder einer Riemenscheibe des weiteren Getriebes erfolgen. Das bedeutet, dass das Kettengetriebe in bestimmten Ausführungsformen eine Kombination aus Ketten- und Riemengetriebe sein kann,
die, wenn der Riemen ein Zahnriemen ist, zumindest drei Ritzel umfasst, wovon zumindest zwei Ritzel zu einem, gegebenenfalls zweiten, Ritzelpaket verbunden sind, wovon ein Ritzel über einen Zahnriemen mit einem Ritzel des weiteren Getriebes verbunden ist; oder
die, wenn der Riemen ein Flach- oder Keilriemen ist, zumindest zwei Ritzel und eine Riemenscheibe umfasst, die mit zumindest einem Ritzel zu einem, gegebenenfalls zweiten, Ritzelpaket verbunden ist, wobei die Riemenscheibe über einen Flach- oder Keilriemen mit einer Riemenscheibe des als Riemengetriebe ausgeführten weiteren Getriebes verbunden ist.

Im Hinblick auf die Zuverlässigkeit der Kraftübertragung erfolgt Letztere in bevorzugten Ausführungsformen ausschließlich über Ketten, was bedeutet, dass das Kettengetriebe vorzugsweise ein reines Kettengetriebe ist, das zumindest drei Ritzel umfasst, wovon zumindest zwei Ritzel zu einem, gegebenenfalls zweiten, Ritzelpaket verbunden sind, wovon ein Ritzel über eine weitere Kette mit einem Ritzel des als reines Kettengetriebe ausgeführten weiteren Getriebes verbunden ist.

In beiden Fällen, also mit oder ohne Einsatz von Riemen, umfasst das Kettengetriebe vorzugsweise zwei Ritzelpakete, die jeweils eine Vielzahl von Ritzeln umfassen, wovon das erste Ritzelpaket zumindest zwei Ritzel zur Einstellung des Übersetzungsverhältnisses zur Kettenblattgarnitur während der Fahrt umfasst, um auf herkömmliche Art und Weise den zum Antrieb des Fahrrads erforderlichen Kraftaufwand steuern zu können.

Vorzugsweise umfasst das zweite Ritzelpaket zumindest drei Ritzel, wobei außer dem Ritzel oder der Riemenscheibe zum Antrieb des weiteren Getriebes zumindest zwei Ritzel zur Einstellung des Übersetzungsverhältnisses zur Kettenblattgarnitur während des Filtrationsvorgangs vorgesehen sind, um so auch den zum Betrieb der Pumpe erforderlichen Kraftaufwand steuern zu können.

Das Ritzel oder die Riemenscheibe zum Antrieb der Verdrängerpumpe liegt dabei im zweiten Ritzelpaket besonders bevorzugt am nächsten zum Speichenflansch, und das erste Ritzelpaket liegt auf der vom Speichenflansch abgewandten Seite des zweiten Ritzelpakets, damit der Umschaltvorgang zwischen den anderen Ritzeln nicht behindert wird. Alternativ zu dieser "innersten" Position am nächsten zum Speichenflansch kann das Ritzel oder die Riemenscheibe zum Antrieb der Verdrängerpumpe zu demselben Zweck auch die "äußerste" Position, d. h. am weitesten vom Speichenflansch entfernt, einnehmen, in welchem Fall das erste Ritzelpaket auf der dem Speichenflansch zugewandten Seite des zweiten Ritzelpakets liegt.

Wie zuvor erwähnt, kann die erfindungsgemäße Wasserfiltrationsvorrichtung auch während der Fahrt mit dem Fahrrad betrieben werden. Zu diesem Zweck umfasst in besonders bevorzugten Ausführungsformen der Erfindung das Kettengetriebe zumindest ein zusätzliches, mit der Hinterradnabe des Fahrrads fest verbundenes Ritzel und umfasst die Vorrichtung ein zweites Schaltwerk, mittels dessen die weitere Kette zum Antrieb des weiteren Kettengetriebes zwischen dem Ritzel des, gegebenenfalls zweiten, Ritzelpakets und dem zusätzlichen Ritzel umschaltbar ist, so dass bei Antrieb des Fahrrad-Hinterrads über die Kette und zumindest ein dazu bestimmtes Ritzel, das gegebenenfalls Teil eines Ritzelpakets ist, gleichzeitig die Verdrängerpumpe über das zusätzliche Ritzel, die weitere Kette und ein Ritzel des weiteren Getriebes auch während der Fahrt antreibbar ist. Wenn in solchen Ausführungsformen der Erfindung beispielsweise an dem Fahrrad jeweils ein oder mehrere Behälter für zu reinigendes Wasser und für Trinkwasser vorgesehen sind, z. B. auf dem Gepäckträger befestigt sind oder auf Rädern von Radfahrer mitgezogen werden, kann durch den gleichzeitigen Antrieb sowohl des Fahrrads als auch der Pumpe auch während der Fahrt Wasser filtriert und so Trinkwasser erzeugt werden. Auf diese Weise kann sich beispielsweise der Fahrer auf längeren Strecken selbst mit Trinkwasser versorgen, obwohl bei der Abfahrt kein sauberes Wasser zur Verfügung stand.

Gemäß vorliegender Erfindung wird in solchen Ausführungsformen bevorzugt, dass das zusätzliche Ritzel zum Antrieb der Verdrängerpumpe während der Fahrt das zum Speichenflansch am nächsten gelegene Ritzel des Kettengetriebes ist und unmittelbar neben dem Ritzel im zweiten Ritzelpaket zum Antrieb der Verdrängerpumpe im Stand liegt. Ist das Ritzel im zweiten Ritzelpaket zum Antrieb der Verdrängerpumpe im Stand hingegen das am weitesten vom Speichenflansch entfernte im zweiten Ritzelpaket, wie zuvor beschrieben, so liegt das zusätzliche Ritzel zum Antrieb der Verdrängerpumpe während der Fahrt zwar ebenfalls unmittelbar daneben, allerdings auf der vom Speichenflansch abgewandten Seite, d. h. das zusätzliche Ritzel ist dann das am weitesten vom Speichenflansch entfernte Ritzel. Beides bewirkt wiederum, dass das Umschalten der Kette zwischen den übrigen Ritzeln nicht behindert und das Umschalten der Kette zwischen den beiden benachbarten Ritzeln zum Antrieb der Verdrängerpumpe erleichtert wird.

Weiters umfasst die Kettenblattgarnitur gemäß vorliegender Erfindung vorzugsweise zumindest zwei Kettenräder und einen Umwerfer zum Wechseln der Fahrradkette zwischen den Kettenrädern zur Einstellung des Übersetzungsverhältnisses zu den Ritzeln oder Ritzelpaketen am Hinterrad, um auf diese Weise den zum Antrieb des Fahrrads erforderlichen Kraftaufwand noch besser steuern zu können.

Die Buchse, auf der das zumindest eine Ritzelpaket, mittels dessen die Verdrängerpumpe antreibbar ist, aufsitzt, ist über ein Gleitlager oder ein Wälzlager, z. B. ein Kugellager oder ein Rollenlager, noch bevorzugter über ein Kugellager, auf der Radnabe frei rotierbar gelagert, um den Reibungswiderstand möglichst niedrig zu halten.

Die gemäß vorliegender Erfindung vorzugsweise als Verdrängerpumpe eingesetzte Hubkolbenpumpe umfasst vorzugsweise entweder einen doppelt wirkenden Kolben oder noch bevorzugter zwei direkt miteinander verbundene Kolben, die gegenläufig betrieben werden, um mit einem Kolbenhub doppelte Wirkung zu erzielen.

In besonders bevorzugten Ausführungsformen der Erfindung umfasst die Hubkolbenpumpe ein Druckrückgewinnungssystem, das dazu ausgebildet ist, mit jeweils ein und demselben Kolbenhub
i) gleichzeitig zu filtrierendes Wasser durch den Einlass anzusaugen sowie Abwasser durch den Auslass auszustoßen bzw.
ii) gleichzeitig zuvor angesaugtes, zu filtrierendes Wasser durch ein Ventil in die Membrantrenneinheit einzuleiten sowie Retentat aus der Membrantrenneinheit durch ein Ventil anzusaugen.
Auf diese Weise kann der zum Betrieb der Pumpe erforderliche Energieaufwand deutlich verringert werden.

Weiters umfasst der Einlass für zu filtrierendes Wasser in die Membrantrenneinheit vorzugsweise einen Pulsationsdämpfer, um Pulsationen während des Pumpvorgangs auszugleichen und für gleichbleibende Fördergeschwindigkeit und -menge zu sorgen.

### KURZBESCHREIBUNG DER ZEICHNUNGEN

Die vorliegende Erfindung wird nachstehend anhand von illustrativen, nichteinschränkenden Ausführungsbeispielen und unter Bezugnahme auf die beiliegenden Zeichnungen näher beschrieben, die Folgendes darstellen:
Fig. 1 ist eine schematische Darstellung der Wirkungsweise der erfindungsgemäßen Wasserfiltrationsvorrichtung;
Fig. 2 zeigt eine einfache Ausführungsform des Getriebes auf der Hinterradachse des Fahrrads;
die Fig. 3 bis 5 zeigen jeweils eine bevorzugte Ausführungsform des Getriebes auf der Hinterradachse des Fahrrads; und
die Fig. 6 und 7 sind schematische Seitenansichten von bevorzugten Ausführungsformen der erfindungsgemäßen Wasserfiltrationsvorrichtung.

### DETALLIERTE BESCHREIBUNG DER ERFINDUNG

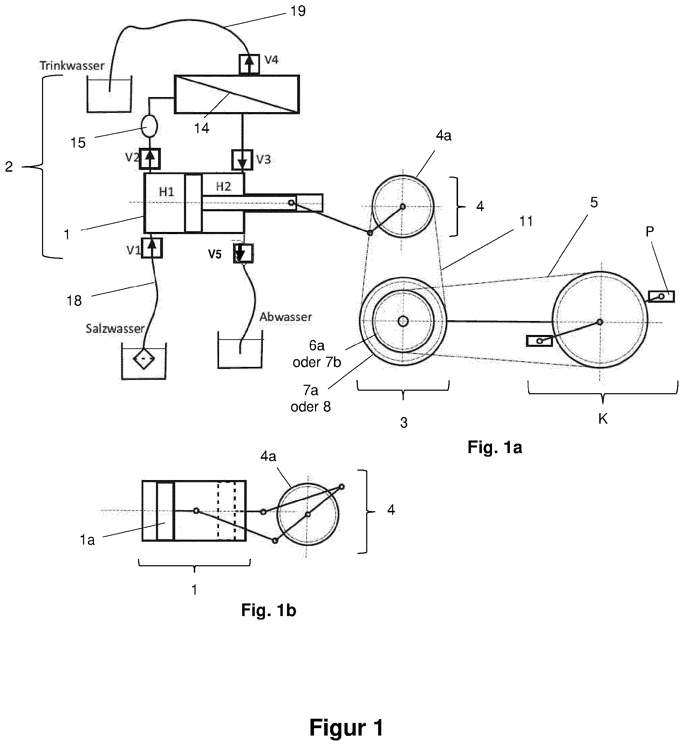

In Fig. 1 ist die Wirkungsweise bestimmter Ausführungsformen der erfindungsgemäßen Wasserfiltrationsvorrichtung schematisch dargestellt, wobei in Fig. 1a das Zusammenwirken des Pedalantriebs P der Kettenblattgarnitur K eines vollständigen Fahrrads, zweier Getriebe 3 und 4 sowie der Verdrängerpumpe 1 der Filtrationseinheit 2 gezeigt wird und in Fig. 1b die beiden Positionen des Kolbens 1a einer als Verdrängerpumpe 1 gewählten und gemäß vorliegender Erfindung bevorzugten Hubkolbenpumpe dargestellt sind.

Aus Fig. 1a ist zu erkennen, dass bei Betätigung der Pedale P der Kettenblattgarnitur K über die Fahrradkette 5 ein Ritzel 6a oder 7b des Kettengetriebes 3 angetrieben wird. Wie zuvor erwähnt, könnte zumindest theoretisch der Antrieb des Fahrrads auch ein Riemenantrieb sein, wobei beispielsweise entweder ein Zahnriemen oder ein Flach- oder Keilriemen die Kette 5 ersetzen können. Im Falle eines Zahnriemens würde die Kraftübertragung auf das Kettengetriebe am Hinterrad weiterhin mittels eines oder mehrerer Kettenblätter der Kettenblattgarnitur erfolgen, während bei Verwendung eines Keil- oder Flachriemens anstelle der Kettenblattgarnitur eine alternatives Kurbelsystem zum Einsatz käme, das neben der Tretkurbel und den Pedalen eine Riemenscheibe anstatt Kettenblättern umfasst.

In letzterem Fall würde der Keil- oder Flachriemen auch kein Ritzel, sondern ebenfalls eine Riemenscheibe des Hinterradgetriebes antreiben, das in Abhängigkeit von der Art der Kraftübertragung zu dem die Pumpe antreibenden weiteren Getriebe dann mitunter auch kein Kettengetriebe wäre. Erfolgt die Kraftübertragung auf das weitere Getriebe ebenfalls mittels Keil- oder Flachriemen, so würde am Hinterrad ein reines Riemengetriebe zum Einsatz kommen, erfolgt sie über eine Kette oder einen Zahnriemen, wäre ein kombiniertes Getriebe aus Ketten- und Riemenantrieb erforderlich.

Wie allerdings ebenfalls zuvor erwähnt, sind solche Ausführungsformen unter Verwendung von Riemen gemäß vorliegender Erfindung aus mehreren Gründen nicht zu bevorzugen: Einerseits ist die Kraftübertragung über Ketten und reine Kettengetriebe zuverlässiger als unter Verwendung von Riemen, da es zu keinem Durchrutschen des Riemens kommen kann und die Haltbarkeit einer Kette aufgrund geringeren Verschleißes in der Regel für einen deutlich längeren Zeitraum gewährleistet ist. Und andererseits könnte in solchen Fällen zur Konstruktion der erfindungsgemäßen Wasserfiltrationsvorrichtung kein im Handel erhältliches Fahrrad eingesetzt werden, was die Kosten deutlich erhöhen würde.

Aus diesen Gründen wird auch nachstehend durchwegs auf eine vordere Kettenblattgarnitur, zwei Antriebsketten sowie zwei reine Kettengetriebe mit Ritzeln und Ritzelpaketen Bezug genommen, wenngleich es sich versteht, dass eine oder mehrere der Ketten durch Riemen (z. B. Zahn-, Keil- oder Flachriemen) sowie gegebenenfalls eines oder mehrere der Ritzel durch Riemenscheiben (z. B. für Keil- oder Flachriemen) ersetzt werden könnten, ohne vom Geiste der Erfindung abzuweichen.

Das somit über die Kettenblattgarnitur K und die Fahrradkette 5 angetriebene Ritzel trägt je nachdem, ob die Pumpe im Stand oder während der Fahrt betrieben wird, das Bezugszeichen 6a oder 7b. Während der Fahrt wird über die Kette 5 das Ritzel 6a angetrieben, während sie für den Pumpbetrieb im Stand mittels eines (nicht dargestellten) Schaltwerks auf Ritzel 7b übertragen wird, das ebenso wie Ritzel 7a Teil eines Ritzelpakets 7 ist, das auf einer frei rotierbar auf der Radnabe gelagerten Buchse aufsitzt und folglich unabhängig vom Hinterrad des Fahrrads rotierbar ist. Mittels Ritzel 7a und eine weitere Kette 11 wird ein Ritzel 4a eines zweiten Getriebes 4 angetrieben, das die Kraft über einen Kurbeltrieb auf den Kolben 1a einer Hubkolbenpumpe 1 überträgt. Bei Verwendung anderer Pumpen, wie zuvor erwähnt, erfolgt die Kraftübertragung auf die jeweilige, dem einschlägigen Fachmann bestens bekannte Weise.

Alternativ dazu kann die Pumpe 1 gemäß vorliegender Erfindung aber auch während Fahrt betrieben werden, wie dies später unter Bezugnahme auf weitere Zeichnungen näher ausgeführt wird. Im Fahrbetrieb erfolgt die Kraftübertragung auf das Getriebe 3 mittels der Kette 5 über das Ritzel 6a. Zum Antrieb der Pumpe wird entweder das Ritzel 6a - oder ein gesamtes erstes Ritzelpaket 6, wovon es gegebenenfalls ein Bestandteil ist - mit dem Ritzelpaket 7 fest verbunden, so dass gleichzeitig mit dem Ritzel 6a auch das Ritzel 7a angetrieben wird und die Kraft über die zweite Kette 11 auf das zweite Getriebe 4 und schließlich auf die Pumpe 1 überträgt; oder die Kette 11 zum Antrieb des zweiten Getriebes 4 wird auf ein zusätzliches Ritzel 8 übertragen, das wie das Ritzel 6a oder das gesamte erste Ritzelpaket 6 fest mit der Radnabe verbunden ist und somit wiederum während der Fahrt die Pumpe 1 antreibt.

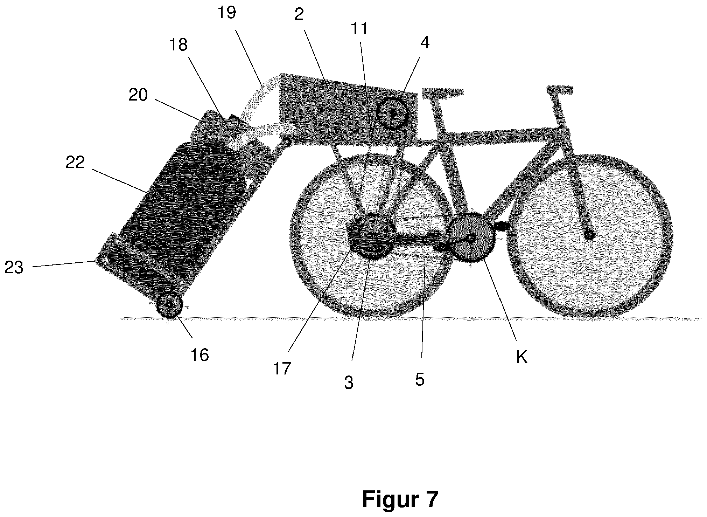

Gemäß vorliegender Erfindung wird die beim Treten der Pedale aufgewandte Kraft vorzugsweise über einen Kurbeltrieb auf den Kolben 1a der bevorzugten Hubkolbenpumpe 1 übertragen, der in Fig. 1a durch über eine Gelenk verbundene Schubstange und Kolbenstange dargestellt ist, wobei in Fig. 1b die beiden Positionen dargestellt sind, zwischen denen der Kolben 1a hin und her bewegt wird. In Fig. 1a sind innerhalb der Pumpe 1 die durch den Kolbenhub erzeugten Hubräume H1 und H2 eingezeichnet, die in bevorzugten Ausführungsformen der vorliegenden Erfindung Teil eines Druckrückgewinnungssystems sind. Dieses dient dazu, mit jeweils ein und demselben Kolbenhub zwei Vorgänge gleichzeitig durchzuführen, nämlich
i) einerseits zu filtrierendes Wasser, in Fig. 1a als "Salzwasser" bezeichnet, aus einem Reservoir, z. B. aus dem Meer oder einem anderen salzhaltigen Gewässer oder auch einem zuvor damit befüllten Vorratsbehälter (z. B. einem Kanister; siehe Bezugszeichen 22 in Fig. 7), über eine Leitung 18 durch den Einlass bzw. Ventil V1 in den Hubraum H1 anzusaugen sowie an Verunreinigungen, wie z.B. Salz, angereichertes Wasser, hier als "Abwasser" bezeichnet, durch den Auslass bzw. Ventil V5 aus dem Hubraum H2 auszustoßen, zu welchem Zweck der Kolben 1a in Richtung der in Fig. 1b strichliert dargestellten Position ganz nach rechts bewegt wird; bzw.
ii) andererseits zuvor in den Hubraum H1 angesaugtes, zu filtrierendes Wasser durch ein Ventil V2 in die Membrantrenneinheit 14 einzuleiten sowie Retentat aus der Membrantrenneinheit 14 durch ein Ventil V3 in den Hubraum H2 anzusaugen, wozu der Kolben 1a in Richtung der in Fig. 1b dargestellten linken Position ganz nach links bewegt wird.

Sämtliche Wasser-Ein- und -Auslässe der Wasserfiltrationsvorrichtung 2 in die Pumpe 1 und in die Membrantrenneinheit 14 bzw. aus diesen heraus sind natürlich vorzugsweise durch Ventile gesichert, um Rückflüsse zu verhindern. Anhand der Ventile kann zudem der Druck gesteuert werden, mit dem das Wasser in die Membrantrenneinheit 14 gelangt, z. B. ein Betriebsdruck im Bereich von 55 bar oder darüber für einen effizienten Ablauf der Umkehrosmose-Trennung eingestellt werden.

Der Einlass für zu filtrierendes Wasser in die Membrantrenneinheit 14 über Ventil V2 umfasst dabei vorzugsweise einen Pulsationsdämpfer 15, wie er bei Verwendung von von diskontinuierlich fördernden Pumpen, wie z.B. der erfindungsgemäß bevorzugten Hubkolbenpumpe 1, oftmals zum Einsatz kommt, um Pulsationen während des Pumpvorgangs auszugleichen und eine gleichbleibende Fördergeschwindigkeit und -menge zu gewährleisten.

Die Art der Membrantrenneinheit 14 ist gemäß vorliegender Erfindung nicht speziell eingeschränkt, und es können sowohl einstufige als auch mehrstufige Systeme eingesetzt werden, solange die Haupt-Einheit über eine oder mehrere geeignete Umkehrosmose-Membranen ("Membranpaket") verfügt, um den gewünschten Reinigungsvorgang, z. B. eine Entsalzung, effizient durchführen zu können. Sowohl innerhalb der Membrantrenneinheit 14 als auch bereits davor können weitere Filter und/oder Membranen zur Vorreinigung des Wassers vorgesehen sein. So kann etwa auch die Leitung 18, bei der sich vorzugsweise um einen Ansaugschlauch handelt, an ihrem bzw. seinem Ende einen oder mehrere Partikelfilter umfassen, beispielsweise einen ersten Filter zur Entfernung von mehr oder weniger groben Partikeln, z. B. mit Partikelgrößen > 20 µm, und danach einen zweiten zur Entfernung von Feinteilchen mit Durchmessern bis hinunter zu < 1 µm ("Ultrafiltration"), wodurch die Umkehrosmose-Membran z. B. gegen Fouling geschützt wird. Weiters können z. B. zur Reinigung von Brackwasser auch ein oder mehrere Aktivkohlefilter vorgesehen sein, und auch die Umkehrosmose-Membran selbst kann, wiederum zum Schutz gegen Fouling, entsprechend beschichtet sein, z. B. mit Silber-Nanopartikeln, TiO₂-, SiO₂- oder Zeolith-Partikeln, z. B. Zeolith A. Zusätzlich kann die Membran in regelmäßigen Intervallen mittels Hindurchpumpen einer Desinfektionslösung gereinigt werden.

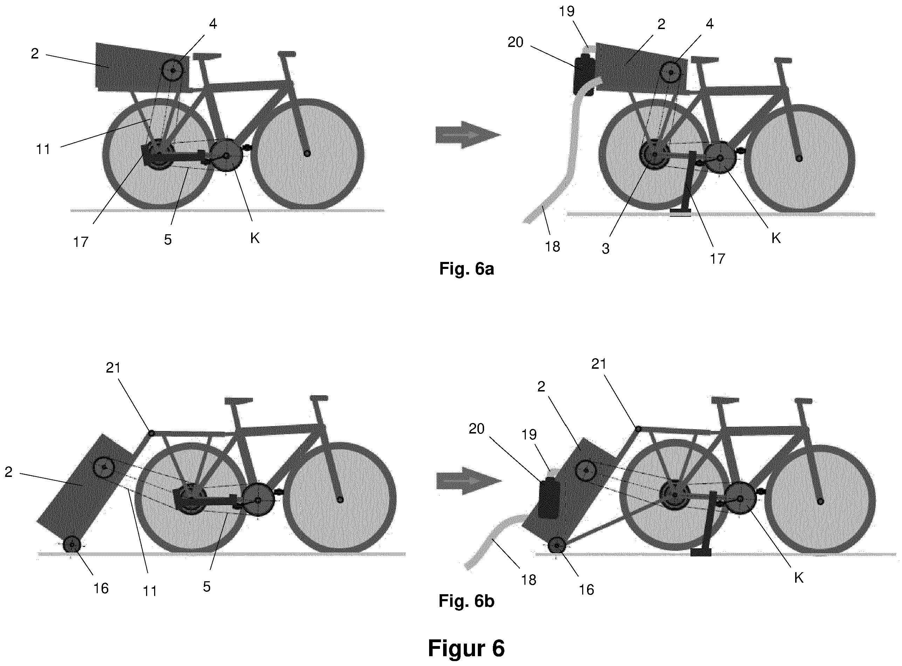

Das in der Membrantrenneinheit 14 mittels Umkehrosmose gereinigte, z. B. für einen Genuss ausreichend entsalzte, Wasser wird über ein Ventil V4 und eine Leitung 19 in einen Auffangbehälter abgegeben (siehe "Trinkwasser" in Fig. 1a und Bezugszeichen 20 in den Fig. 6 und 7).

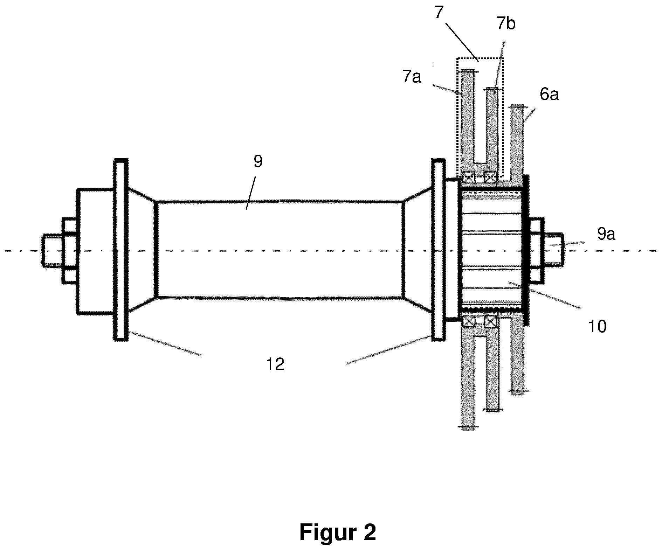

In Fig. 2 ist eine einfache Ausführungsform des Getriebes auf der Hinterradachse 9a des Fahrrads dargestellt. Dieses umfasst ein relativ zum Speichenflansch 12 äußerstes Ritzel 6a, das mit der Hinterradnabe 9 des Fahrrads fest verbunden ist und (über die Kette 5 aus Fig. 1a) zum Antrieb des Fahrrad-Hinterrads während der Fahrt dient, sowie ein Ritzelpaket 7, das zwei Ritzel 7a und 7b umfasst und auf einer frei rotierbar auf der Radnabe 9 gelagerten Buchse 10 aufsitzt. Dabei dient das innerste Ritzel 7a zum Antrieb der Pumpe - mittels einer zweiten Kette (Bezugszeichen 11 in Fig. 1a) - und das mittlere Ritzel 7b zum Antrieb des Ritzelpakets 7 im Stand, indem die Fahrrad-Antriebskette (Bezugszeichen 5 in Fig. 1a) von Ritzel 6a auf Ritzel 7b umgeschaltet wird.

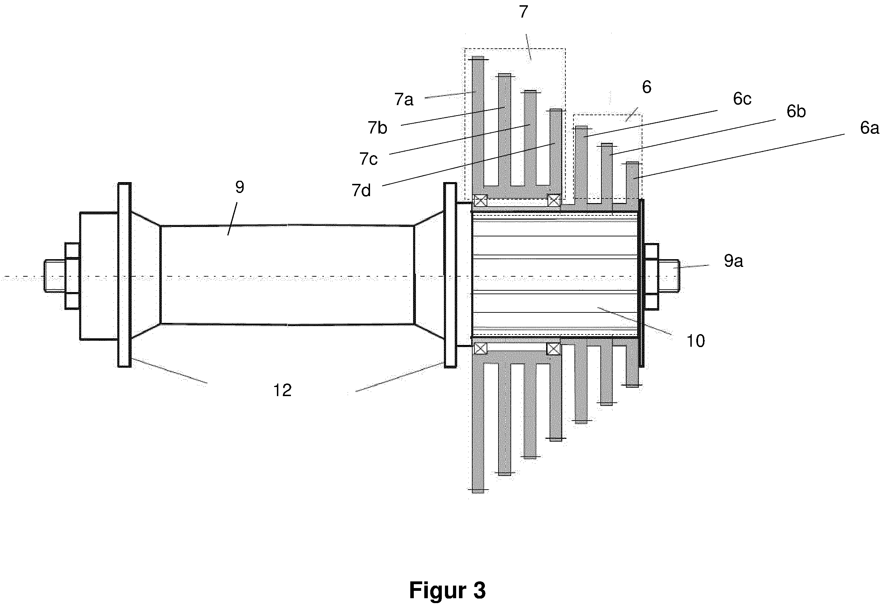

Fig. 3 zeigt eine ähnliche, aber aufwändigere Ausführungsform des Getriebes aus Fig. 2, bei dem der Antrieb des Hinterrads über ein erstes Ritzelpaket 6 erfolgt, das neben dem Ritzel 6a noch zwei weitere Ritzel 6b und 6c umfasst, um das Übersetzungsverhältnis zur Kettenblattgarnitur ("K" in Fig. 1a) und damit den erforderlichen Kraftaufwand während der Fahrt einstellen zu können. Und auch das, nunmehr zweite, Ritzelpaket 7 umfasst in dieser Ausführungsform zwei weitere Ritzel 7c und 7d, d. h. neben dem Ritzel 7a zum Antrieb der Pumpe insgesamt noch drei Ritzel 7b bis 7d, zwischen denen die Kette ("5" in Fig. 1a) im Standbetrieb umgeschaltet werden kann, um auch den erforderlichen Kraftaufwand beim Pumpen regulieren zu können, z. B. in Abhängigkeit davon, ob und wie viele Filtrations- und/oder Membrantrennstufen während des Pumpvorgangs gleichzeitig betrieben werden.

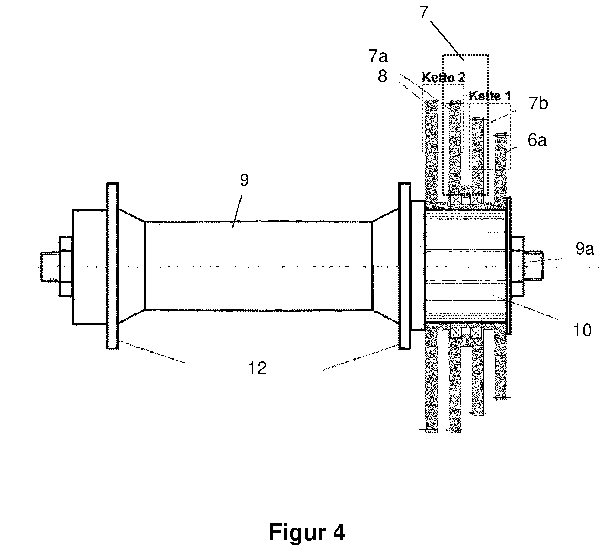

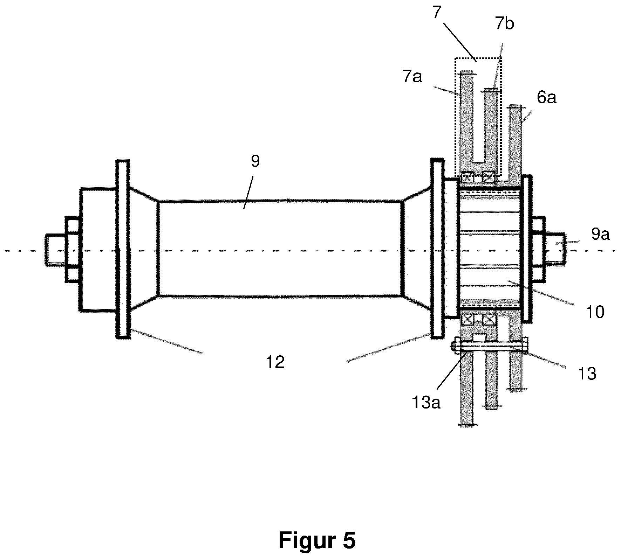

In den Fig. 4 und 5 sind zwei Varianten der erfindungsgemäßen Wasserfiltrationsvorrichtung dargestellt, bei denen auch während der Fahrt die Pumpe betrieben und Wasser gereinigt werden kann.

Bei jener aus Fig. 4 wird dies durch ein im Vergleich zur Ausführungsform aus Fig. 2 zusätzliches Ritzel 8 ermöglicht, das relativ zum Speichenflansch 12 ganz innen, d. h. innerhalb des Ritzelpakets 7 positioniert ist. Wie bei der Ausführungsform aus Fig. 2 erfolgt der Antrieb des Hinterrads ausschließlich über Ritzel 6a, wobei die mit der Kettenblattgarnitur verbundene Kette - hier als "Kette 1" bezeichnet - zum Antrieb der Pumpe im Stand auf Ritzel 7b des Ritzelpakets 7 umgeschaltet wird, dessen Ritzel 7a dann wiederum über eine zweite Kette - hier als "Kette 2" gekennzeichnet - und das zweite Getriebe ("4" in Fig. 1a) die Pumpe antreibt. Allerdings kann die Kette 2 bei der in Fig. 4 gezeigten Ausführungsform zwischen Ritzel 7a und dem zusätzlichen Ritzel 8 umgeschaltet werden, das ebenfalls fest mit der Hinterradnabe 9 verbunden ist, so dass bei Antrieb des Hinterrads über Ritzel 6a gleichzeitig über Ritzel 8 und Kette 2 die Pumpe betrieben wird.

Fig. 5 zeigt eine Alternative zur Ausführungsform aus Fig. 4, bei der in einer im Wesentlichen der Konstruktion aus Fig. 2 entsprechenden Ausführungsform der Erfindung zusätzlich Bohrungen 13a in den drei Ritzeln 6a, 7a und 7b vorgesehen sind, durch die eine Schraube 13 (oder auch ein Bolzen oder dergleichen) hindurchführbar und mittels Muttern (oder dergleichen) fixierbar ist, um das Ritzelpaket 7 mit dem Antriebsritzel 6a fest zu verbinden, wodurch das Ritzelpaket 7 nicht mehr um die Radnabe 9 frei rotierbar ist, sondern zusammen mit dem Hinterrad über Ritzel 6a angetrieben wird, wodurch wiederum die Pumpe über Ritzel 7a oder Ritzel 7b und die (in Fig. 5 nicht dargestellte) zweite Kette auch während der Fahrt angetrieben wird. Durch Umschalten der zweiten Kette zwischen Ritzel 7a und Ritzel 7b mittels eines (nicht dargestellten), gegebenenfalls weiteren, Umwerfers ist in dieser Ausführungsform der Erfindung sogar während der Fahrt der zum Betrieb der Pumpe erforderliche Kraftaufwand und damit auch der von der Pumpe erzielbare Druck variabel. Dies ist - wie auch zuvor für die Ausführungsform aus Fig. 3 - in Anbetracht des Umstands, dass speziell für die Entsalzung von Meerwasser hohe Drücke erforderlich sind, ein enormer Vorteil der erfindungsgemäßen Vorrichtung.

Die Bohrungen 13a müssen zu diesem Zweck natürlich in den Ritzeln fluchtend, d. h. auf einer zur Achse parallelen Geraden liegend, vorgesehen sein, wobei vorzugsweise jeweils zwei oder mehrere fluchtende Bohrungen in allen Ritzeln vorgesehen sind, z. B. je zwei oder je vier Bohrungen symmetrisch zur Achse, d. h. auf gegenüberliegenden Seiten der Achse, um durch die Symmetrie die Haltbarkeit der Konstruktion zu erhöhen.

Durch die Option, mit der erfindungsgemäßen Wasserfiltrationsvorrichtung auch während der Fahrt die Pumpe betreiben zu können, kann sich beispielsweise der Fahrer auf längeren Strecken selbst mit Trinkwasser versorgen, obwohl bei der Abfahrt kein sauberes Wasser zur Verfügung stand, und das im Standbetrieb vor Ort, z. B. am Meer oder an einem sonstigen Gewässer, gereinigte Wasser kann entweder in einem Sammelbehälter ebendort zurückbleiben oder mittels des Fahrrads oder auf andere Weise abtransportiert werden.

In den Fig. 6 und 7 sind schließlich schematische Seitenansichten der erfindungsgemäßen Wasserfiltrationsvorrichtung dargestellt, wobei Fig. 6 zwei Ausführungsformen für den Einsatz im Standbetrieb und Fig. 7 eine Ausführungsform zeigt, die während der Fahrt betrieben werden kann. In beiden Fällen ist das vollständige, funktionsfähige Fahrrad zu erkennen, das neben dem Fahrradrahmen unter anderem eine Kettenblattgarnitur K, ein über die erste Kette 5 angetriebenes Getriebe 3 am Hinterrad, das - im Stand oder auch während der Fahrt - über die zweite Kette 11 das zweite Getriebe 4 zum Antrieb der in der Filtrationseinheit 2 enthaltene Pumpe antreibt. Die Filtrationseinheit 2 kann beispielsweise auf dem Gepäckträger des Fahrrads untergebracht sein, wie in den Fig. 6a und 7 gezeigt wird, oder über Räder 16 verfügen und ähnlich einem Fahrradanhänger mitgezogen werden. In bevorzugten Ausführungsformen ist die Filtrationseinheit 2 zwischen diesen beiden Positionen über ein Gelenk 21 verschwenkbar gelagert am Fahrrad montiert, wie dies in Fig. 6b dargestellt ist.

In Fig. 6 ist der Standbetrieb der erfindungsgemäßen Wasserfiltrationsvorrichtung schematisch dargestellt, zu welchem Zweck unmittelbar vor dem Anhalten die Kette 5 vom Fahrbetriebsritzel oder -ritzelpaket ("6a" bzw. "6" in den Fig. 1 bis 5) auf ein Standbetriebsritzel ("7b" bis "7d") des, gegebenenfalls zweiten, Ritzelpakets ("7") des Getriebes 3 umgeschaltet wird und der Fahrradständer 17 heruntergeklappt wird, um für einen sicheren Stand zu sorgen. Anschließend wird die Filtrationseinheit 2 über die Leitung 18, vorzugsweise einen Ansaugschlauch (oder ein Rohr), mit einem Reservoir an zu reinigendem Wasser, etwa einem stehenden Gewässer, wie z.B. Meerwasser, verbunden. Durch Betätigung der Pedale der Kettenblattgarnitur K wird nun die Pumpe der Filtrationseinheit 2 angetrieben, wodurch Wasser angesaugt und in der Membrantrenneinheit wie zuvor beschrieben gereinigt wird, wonach über Leitung 19, die vorzugsweise ebenfalls ein Schlauch (oder auch ein Rohr oder dergleichen) ist, Trinkwasser aus der Trenneinheit abgegeben wird, das in einem Behälter 20, z. B. einem Kanister oder einer Flasche, gesammelt wird. Bei Verwendung ähnlich kleiner Behälter 20 wie in Fig. 6 dargestellt, können diese natürlich ausgetauscht werden, sobald sie mit Trinkwasser gefüllt wurden.

Die Wirkungsweise der in Fig. 7 dargestellten Ausführungsform ist im Wesentlichen dieselbe wie jene aus Fig. 6, nur dass hier zusätzlich auch während der Fahrt Wasser gereinigt (z. B. entsalzt) werden kann, indem vor Antritt der Fahrt der Behälter 22 mit zu reinigendem Wasser (z. B. Salzwasser) gefüllt wird, der ebenso wie der Trinkwasserbehälter 20 in einem mit Rädern 16 ausgestatteten Anhänger 23 untergebracht ist. Als Alternative zu der in Fig. 7 dargestellten Ausführungsform kann die Anordnung der Filtrationseinheit 2 und der Behälter 20 und 22 auch umgekehrt sein, d. h. die Filtrationseinheit 2 kann mit Rädern 16 versehen sein oder in einem mit Rädern 16 ausgestatteten Anhänger 23 untergebracht sein und vom Fahrer gezogen werden, während die beiden Behälter für Salz- und Trinkwasser 22 bzw. 20 auf dem Gepäckträger untergebracht sind oder beispielsweise auch jeweils zwei solcher Behälter auf beiden Seiten des Fahrrads vom Gepäckträger herabhängen. Auch Kombinationen davon oder Ausführungsformen, bei denen sowohl die Filtrationseinheit 2 als auch die Behälter 20 und 22 entweder auf dem Gepäckträger getragen oder jeweils Räder 16 umfassen oder in einem mit Rädern 16 ausgestatteten Anhänger 23 untergebracht sind und nachgezogen werden, sind gemäß vorliegender Erfindung möglich.

Die vorliegende Erfindung stellt jedenfalls erstmalig eine Wasserfiltrationsvorrichtung bereit,
i) mit der ausschließlich unter Aufwand von Muskelkraft Trinkwasser bereitet werden kann, ohne davor irgendwelche Auf- oder Umbauarbeiten vornehmen zu müssen;
ii) die zur Gänze mobil ist; und
iii) mit der die Trinkwasserbereitung auch während der Fahrt möglich ist;
was eine erhebliche Verbesserung gegenüber dem Stand der Technik darstellt.

## Patentansprüche

1. Wasserfiltrationsvorrichtung, umfassend eine auf Umkehrosmose-Membrantrennung basierende, mittels einer Verdrängerpumpe (1) betreibbare Filtrationseinheit (2), die ein Einlassventil für zu filtrierendes Wasser (V1), ein Auslassventil für filtriertes Permeatwasser (V4) und ein Auslassventil für Retentat-Abwasser (V5) umfasst, sowie ein Kettengetriebe (3) zum Antrieb der Verdrängerpumpe (1), das an einem Fahrradrahmen montiert und über eine Kette (5) und eine Pedale (P) umfassende Kettenblattgarnitur (K) mit Muskelkraft betreibbar ist,
**dadurch gekennzeichnet, dass:**
i) das Kettengetriebe (3), die Kette (5), die Kettenblattgarnitur (K) samt Pedalen (P) und der Fahrradrahmen Bestandteile eines vollständigen, funktionsfähigen Fahrrads sind;
ii) das Kettengetriebe (3) ein reines Kettengetriebe oder eine Kombination aus Ketten- und Riemengetriebe ist und über ein weiteres Ketten- oder Riemengetriebe (4) mit der Verdrängerpumpe (1) verbunden ist;
iii) das Kettengetriebe (3) zumindest ein Schaltwerk umfasst, mittels dessen die Fahrradkette (5) zwischen zumindest zwei Ritzeln (6a-6c, 7b-7d) umschaltbar ist, wovon
zumindest ein Ritzel (6a-6c), das gegebenenfalls Teil eines Ritzelpakets (6) ist, mit der Hinterradnabe (9) des Fahrrads fest verbunden ist und zum Antrieb des Fahrrad-Hinterrads bestimmt ist und
zumindest ein Ritzel (7b-7d) Teil eines, gegebenenfalls zweiten, Ritzelpakets (7) ist, das auf einer frei rotierbar auf der Radnabe (9) gelagerten Buchse (10) aufsitzt und das zumindest ein weiteres Ritzel oder eine Riemenscheibe (7a) umfasst, das bzw. die über eine weitere Kette oder einen Riemen (11) mit einem Ritzel oder einer Riemenscheibe (4a) des Ketten- oder Riemengetriebes (4) verbunden ist und zum Antrieb der Verdrängerpumpe (1) bestimmt ist; und
iv) die Filtrationseinheit (2) mit dem Fahrrad fest, aber vorzugsweise lösbar, verbunden und damit zusammen beweglich ist, wodurch die Wasserfiltrationsvorrichtung als Ganzes mobil ist.

2. Wasserfiltrationsvorrichtung nach Anspruch 1, **dadurch gekennzeichnet, dass** die Verdrängerpumpe (1) eine hydraulische Hubkolbenpumpe mit zumindest einem Kolben (1a) ist, die über ein Schubkurbelgetriebe oder einen Kurbeltrieb als weiteres Ketten- oder Riemengetriebe (4) mit dem Kettengetriebe (3) verbunden ist.

3. Wasserfiltrationsvorrichtung nach Anspruch 1 oder 2, **dadurch gekennzeichnet, dass** das Kettengetriebe (3) eine Kombination aus Ketten- und Riemengetriebe ist, die
zumindest drei Ritzel (6a-6c, 7a-7d) umfasst, wovon zumindest zwei Ritzel (7a-7d) zu einem, gegebenenfalls zweiten, Ritzelpaket (7) verbunden sind, wovon ein Ritzel (7a) über einen Zahnriemen (11) mit einem Ritzel (4a) des weiteren Getriebes (4) verbunden ist; oder
zumindest zwei Ritzel (6a-6c, 7b-7d) und eine Riemenscheibe (7a) umfasst, die mit zumindest einem Ritzel (7b-7d) zu einem, gegebenenfalls zweiten, Ritzelpaket (7) verbunden ist, wobei die Riemenscheibe (7a) über einen Flach- oder Keilriemen (11) mit einer Riemenscheibe (4a) des als Riemengetriebe ausgeführten weiteren Getriebes (4) verbunden ist.

4. Wasserfiltrationsvorrichtung nach Anspruch 1 oder 2, **dadurch gekennzeichnet, dass** das Kettengetriebe (3) ein reines Kettengetriebe ist, das zumindest drei Ritzel (8, 6a-6c, 7a-7d) umfasst, wovon zumindest zwei Ritzel (7a-7d) zu einem, gegebenenfalls zweiten, Ritzelpaket (7) verbunden sind, wovon ein Ritzel (7a) über eine weitere Kette (11) mit einem Ritzel (4a) des als Kettengetriebe ausgeführten weiteren Getriebes (4) verbunden ist.

5. Wasserfiltrationsvorrichtung nach Anspruch 3 oder 4, **dadurch gekennzeichnet, dass** das Kettengetriebe (3) zwei jeweils eine Vielzahl von Ritzeln (6a-6c, 7a-7d oder 7b-7d) umfassende Ritzelpakete (6, 7) umfasst, wovon das erste Ritzelpaket (6) zumindest zwei Ritzel (6a-6c) zur Einstellung des Übersetzungsverhältnisses zur Kettenblattgarnitur (K) während der Fahrt umfasst.

6. Wasserfiltrationsvorrichtung nach Anspruch 5, **dadurch gekennzeichnet, dass** das zweite Ritzelpaket (7) zumindest drei Ritzel (7a-7d oder 7b-7d) umfasst, wobei außer dem Ritzel oder der Riemenscheibe (7a) zum Antrieb des weiteren Getriebes (4) zumindest zwei Ritzel (7b-7d) zur Einstellung des Übersetzungsverhältnisses zur Kettenblattgarnitur (K) während des Filtrationsvorgangs vorgesehen sind,
wobei gegebenenfalls das Ritzel oder die Riemenscheibe (7a) zum Antrieb der Verdrängerpumpe (1) im zweiten Ritzelpaket (7) zum Speichenflansch (12) am nächsten gelegen ist.

7. Wasserfiltrationsvorrichtung nach einem der Ansprüche 4 bis 6, **dadurch gekennzeichnet, dass** das mit der Hinterradnabe (9) des Fahrrads fest verbundene und zum Antrieb des Fahrrad-Hinterrads bestimmte Ritzel (6a) oder ein erstes Ritzelpaket (6) mit dem auf der frei rotierbar auf der Radnabe (9) gelagerten Buchse (10) aufsitzenden, gegebenenfalls zweiten, Ritzelpaket (7) mit zumindest einem Verbindungselement (13) fest verbindbar ist und bei Antrieb des Getriebes (3) die Verdrängerpumpe (1) über das Ritzel oder die Riemenscheibe (7a) zum Antrieb derselben, die weitere Kette (11) und das Ritzel (4a) des weiteren Getriebes (4) auch während der Fahrt antreibbar ist,
wobei das zumindest eine Verbindungselement (13) gegebenenfalls eine oder mehrere Schrauben sind, die durch jeweilige Bohrungen (13a) in allen Ritzeln (6a-6c, 7a-7d) hindurchführbar und mittels Muttern fixierbar sind.

8. Wasserfiltrationsvorrichtung nach einem der Ansprüche 4 bis 6, **dadurch gekennzeichnet, dass**
- das Kettengetriebe (3) zumindest ein zusätzliches, mit der Hinterradnabe (9) des Fahrrads fest verbundenes Ritzel (8) umfasst und die Vorrichtung ein zweites Schaltwerk umfasst, mittels dessen die weitere Kette (11) zum Antrieb des weiteren Kettengetriebes (4) zwischen dem Ritzel (7a) des, gegebenenfalls zweiten, Ritzelpakets (7) und dem zusätzlichen Ritzel (8) umschaltbar ist, und
- bei Antrieb des Fahrrad-Hinterrads über die Kette (5) und zumindest ein dazu bestimmtes Ritzel (6a-6c), das gegebenenfalls Teil eines Ritzelpakets (6) ist, gleichzeitig die Verdrängerpumpe (1) über das zusätzliche Ritzel (8), die weitere Kette (11) und ein Ritzel (4a) des weiteren Getriebes (4) auch während der Fahrt antreibbar ist.

9. Wasserfiltrationsvorrichtung nach Anspruch 8, **dadurch gekennzeichnet, dass** das zusätzliche Ritzel (8) zum Antrieb der Verdrängerpumpe (1) während der Fahrt das zum Speichenflansch (12) am nächsten gelegene Ritzel des Kettengetriebes (3) ist.

10. Wasserfiltrationsvorrichtung nach einem der Ansprüche 1 bis 9, **dadurch gekennzeichnet, dass** die Kettenblattgarnitur (K) zumindest zwei Kettenräder und einen Umwerfer zum Wechseln der Fahrradkette (5) zwischen den zumindest zwei Kettenrädern zur Einstellung des Übersetzungsverhältnisses zu den Ritzeln (6a-6c, 7b-7d) oder Ritzelpaketen (6, 7) am Hinterrad umfasst.

11. Wasserfiltrationsvorrichtung nach einem der Ansprüche 1 bis 10, **dadurch gekennzeichnet, dass** die Buchse (10) über ein Kugellager auf der Radnabe (9) frei rotierbar gelagert ist.

12. Wasserfiltrationsvorrichtung nach einem der Ansprüche 1 bis 11, **dadurch gekennzeichnet, dass** die Filtrationseinheit (2)
- auf dem Gepäckträger oberhalb des Hinterrads am Fahrrad montiert ist; oder
- mit Rädern (16) versehen und als Anhänger am Fahrrad montiert ist; oder
- zwischen diesen beiden Positionen über ein Gelenk (21) verschwenkbar gelagert am Fahrrad montiert ist.

13. Wasserfiltrationsvorrichtung nach einem der Ansprüche 1 bis 12, **dadurch gekennzeichnet, dass** die Hubkolbenpumpe (1) zwei direkt miteinander verbundene Kolben umfasst.

14. Wasserfiltrationsvorrichtung nach einem der Ansprüche 1 bis 13, **dadurch gekennzeichnet, dass** die Hubkolbenpumpe (1) ein Druckrückgewinnungssystem umfasst, das dazu ausgebildet ist, mit jeweils ein und demselben Kolbenhub
i) gleichzeitig zu filtrierendes Wasser durch den Einlass (V1) anzusaugen sowie Abwasser durch den Auslass (V5) auszustoßen bzw.
ii) gleichzeitig zuvor angesaugtes, zu filtrierendes Wasser durch ein Ventil (V2) in die Membrantrenneinheit (14) einzuleiten sowie Retentat aus der Membrantrenneinheit (14) durch ein Ventil (V3) anzusaugen.

15. Wasserfiltrationsvorrichtung nach einem der Ansprüche 1 bis 14, **dadurch gekennzeichnet, dass** der Einlass für zu filtrierendes Wasser in die Membrantrenneinheit (14) einen Pulsationsdämpfer (15) umfasst.

## Claims

1. A water filtration device, which comprises a filtration unit (2), being based on reverse osmosis membrane separation and operable by a displacement pump (1) and comprising an inlet valve for water to be filtered (V1), an outlet valve for filtered permeate water (V4) and an outlet valve for retentate waste water (V5), and a chain gear (3), being mounted to a bicycle frame and operable for driving said displacement pump (1) via a human-powered chainring set (K) comprising a chain (5) and pedals (P), **characterised in that:**
i) said chain gear (3), said chain (5), said chainring set (K) including said pedals (P), and said bicycle frame are components of a complete, functioning bicycle;
ii) said chain gear (3) is only a chain gear or a combination of a chain gear and a belt drive and connected to the displacement pump (1) via a further chain gear or belt drive (4);
iii) said chain gear (3) comprises at least one derailleur mechanism by which the bicycle chain (5) is switchable between at least two sprocket wheels (6a-6c, 7b-7d), of which
at least one sprocket wheel (6a-6c), optionally being part of a sprocket cluster (6), is firmly connected to a hub (9) of the bicycle's rear wheel and intended to drive the bicycle's rear wheel, and
at least one sprocket wheel (7b-7d) which is part of an, optionally second, sprocket cluster (7) that rests on a bush (10) that freely rotates on the hub (9) and comprises at least one further sprocket wheel or a pulley (7a) that is connected to a sprocket or a pulley (4a) of said chain gear or belt drive (4) via a further chain or a belt (11) and intended to drive the displacement pump (1); and
iv) said filtration unit (2) is firmly, but preferably releasably, connected to said bicycle and movable therewith, which renders the entire water filtration device mobile.

2. The water filtration device according to claim 1, **characterised in that** the displacement pump (1) is a hydraulic reciprocating piston pump with at least one piston (1a) that is connected to said chain gear (3) via a slider-crank mechanism or a crank gear as said further chain gear or belt drive (4).

3. The water filtration device according to claim 1 or 2, **characterised in that** said chain gear (3) is a combination of a chain gear and a belt drive, which
comprises at least three sprocket wheels (6a-6c, 7a-7d), at least two sprocket wheels (7a-7d) of which are connected to form an, optionally second, sprocket cluster (7), one sprocket wheel (7a) of which is connected to a sprocket wheel (4a) of said further gear (4) via a toothed belt (11); or
comprises two sprocket wheels (6a-6c, 7b-7d) and a pulley (7a) that is connected to at least one sprocket wheel (7b-7d) to form an, optionally second, sprocket cluster (7), said pulley (7a) being connected via a flat belt or a V-belt (11) to a pulley (4a) of said further gear (4) that is embodied as a belt drive.

4. The water filtration device according to claim 1 or claim 2, **characterised in that** said chain gear (3) is only a chain gear that comprises at least three sprocket wheels (8, 6a-6c, 7a-7d), at least two sprocket wheels (7a-7d) of which are connected to an, optionally second, sprocket cluster (7), one sprocket wheel (7a) of which is connected via a further chain (11) to a sprocket wheel (4a) of said further gear (4) that is embodied as a chain gear.

5. The water filtration device according to claim 3 or claim 4, **characterised in that** said chain gear (3) comprises two sprocket clusters (6, 7), each comprising a plurality of sprocket wheels (6a-6c, 7a-7d or 7b-7d), the first sprocket cluster (6) of which comprises at least two sprocket wheels (6a-6c) to adjust the gear transmission ratio to the chainring set (K) while driving.

6. The water filtration device according to claim 5, **characterised in that** the second sprocket cluster (7) comprises at least three sprocket wheels (7a-7d or 7b-7d), at least two sprocket wheels (7b-7d) being provided in addition to the sprocket wheel or pulley (7a) for driving said further gear (4) to adjust the gear transmission ratio to the chainring set (K) during the filtration process,
said sprocket wheel or pulley (7a) for driving the displacement pump (1) being optionally closest to the spoke flange (12) in the second sprocket cluster (7).

7. The water filtration device according to any one of the claims 4 to 6, **characterised in that** the sprocket wheel (6a) that is firmly connected to the hub (9) of the bicycle's rear wheel and intended to drive the bicycle's rear wheel or a first sprocket cluster (6) is firmly connectable to the, optionally second, sprocket cluster (7) that rests on the bush (10) that is mounted to the hub (9) by means of at least one connecting element (13) in a freely rotating way and **in that**, when the gear (3) is driven, the displacement pump (1) can be driven while driving via said sprocket wheel or pulley (7a) for driving said displacement pump (1), said further chain (11) and the sprocket wheel (4a) of said further gear (4),
said at least one connecting element (13) being optionally one or more screws being insertable via corresponding bores (13a) in all sprocket wheels (6a-6c, 7a-7d) and fixable by means of nuts.

8. The water filtration device according to any one of the claims 4 to 6, **characterised in that**
- said chain gear (3) comprises at least one additional sprocket wheel (8) that is firmly connected to the hub (9) of the bicycle's rear wheel and **in that** said device comprises a second derailleur mechanism by means of which said further chain (11) for driving said further chain gear (4) is switchable between the sprocket wheel (7a) of said, optionally second, sprocket cluster (7) and said additional sprocket wheel (8), and
- when the bicycle's rear wheel is driven via said chain (5) and at least one sprocket wheel (6a-6c) intended for this purpose, which is optionally part of a sprocket cluster (6), the displacement pump (1) is simultaneously drivable via said additional sprocket wheel (8), said further chain (11) and a sprocket wheel (4a) of said further gear (4), also while driving.

9. The water filtration device according to claim 8, **characterised in that** said additional sprocket wheel (8) for driving the displacement pump (1) while driving is that sprocket wheel of the chain gear (3) that is closest to the spoke flange (12).

10. The water filtration device according to any one of the claims 1 to 9, **characterised in that** said chainring set (K) comprises at least two chain wheels and one derailleur for switching the bicycle chain (5) between the at least two chain wheels for adjusting the gear transmission ratio to the sprocket wheels (6a-6c, 7b-7d) or sprocket clusters (6, 7) on the rear wheel.

11. The water filtration device according to any one of the claims 1 to 10, **characterised in that** the bush (10) is arranged on the hub (9) in a freely rotating way using a ball bearing.

12. The water filtration device according to any one of the claims 1 to 11, **characterised in that** said filtration unit (2)
- is mounted on the bicycle rack above the bicycle's rear wheel; or
- is provided with two wheels (16) and mounted to the bicycle as a trailer; or
- is mounted to the bicycle in a way to be pivotable between these two positions by means of a hinge (21).

13. The water filtration device according to any one of the claims 1 to 12, **characterised in that** said reciprocating piston pump (1) comprises two pistons that are directly connected to each other.

14. The water filtration device according to any one of the claims 1 to 13, **characterised in that** said reciprocating piston pump (1) comprises a pressure recovery system that is configured to
i) simultaneously take in water to be filtered via the inlet (V1) and expel waste water via the outlet (V5) or
ii) simultaneously introduce water to be filtered that has been taken in before into the membrane separation unit (14) via a valve (V2) and take in retentate from the membrane separation unit (14) via a valve (V3)
in the course of a single piston stroke.

15. The water filtration device according to any one of the claims 1 to 14, **characterised in that** the inlet for water to be filtered into the membrane separation unit (14) comprises a pulsation damper (15).

## Revendications

1. Dispositif de filtration d'eau, qui comprend une unité de filtration (2) basée sur la séparation par membrane d'osmose inverse et actionnée par une pompe volumétrique (1), comportant une soupape d'admission pour de l'eau à filtrer (V1), une soupape d'échappement pour de l'eau de perméat filtrée (V4) et une soupape d'échappement pour l'eau usée de retentat (V5) ainsi qu'une transmission à chaîne (3) montée sur le cadre d'un vélo pour l'actionnement de la pompe volumétrique (1) et pouvant être actionnée par force musculaire au moyen d'un ensemble de plateaux (K) comportant une chaîne (5) et des pédales (P),
**caractérisé en ce que :**
i) la transmission à chaîne (3), la chaîne (5), l'ensemble de plateaux (K) avec les pédales (P) et le cadre du vélo représentent les composants d'un vélo complet et fonctionnant ;
ii) la transmission à chaîne (3) est une pure transmission à chaîne ou une combinaison entre une transmission à chaîne et une transmission à courroie et est reliée à la pompe volumétrique (1) au moyen d'une autre transmission à chaîne ou à courroie (4) ;
iii) la transmission à chaîne (3) comprend au moins un mécanisme dérailleur, grâce auquel la chaîne du vélo (5) peut être déplacée entre au moins deux pignons (6a-6c, 7b-7d), parmi lesquels
au moins un pignon (6a-6c), qui fait éventuellement partie d'une cassette de pignons (6), est solidaire avec le moyeu (9) de la roue arrière du vélo et sert à entraîner la roue arrière du vélo et
au moins un pignon (7b-7d) fait partie d'une, éventuelle deuxième, cassette de pignons (7), qui repose sur une douille (10) libre de tourner sur le moyeu du vélo (9) et qui comprend au moins un autre pignon ou une roue à courroie (7a), qui est relié(e) à un pignon ou une roue à courroie (4a) de la transmission à chaîne ou à courroie (4) au moyen d'une autre chaîne ou courroie (11) et sert à actionner la pompe volumétrique (1) ; et
iv) l'unité de filtration (2) est reliée au vélo de façon solidaire, mais de préférence amovible et peut être déplacée avec lui, ce qui rend l'unité de filtration d'eau entièrement mobile.

2. Dispositif de filtration d'eau selon la revendication 1, **caractérisé en ce que** la pompe volumétrique (1) est une pompe hydraulique à pistons alternatifs avec au moins un piston (1a), qui est reliée à la transmission à chaîne (3) au moyen d'une transmission à bielle-manivelle ou à manivelle comme autre transmission à chaine ou à courroie (4).

3. Dispositif de filtration d'eau selon l'une des revendications 1 ou 2, **caractérisé en ce que** la transmission à chaîne (3) est une combinaison entre une transmission à chaîne et une transmission à courroie, qui comprend
au moins trois pignons (6a-6c, 7a-7d), parmi lesquels au moins deux pignons (7a-7d) sont reliés pour former une, éventuellement deuxième, cassette de pignons (7), parmi lesquels un pignon (7a) est relié à un pignon (4a) de l'autre transmission (4) au moyen d'une courroie dentée (11) ; ou
au moins deux pignons (6a-6c, 7b-7d) et une roue à courroie (7a), qui est reliée à au moins un pignon (7b-7d) pour former une, éventuellement deuxième, cassette de pignons (7), la roue à courroie (7a) étant reliée à une roue à courroie (4a) de l'autre transmission (4), réalisée sous forme de transmission à courroie, au moyen d'une courroie plate ou trapézoïdale (11).

4. Dispositif de filtration d'eau selon l'une des revendications 1 ou 2, **caractérisé en ce que** la transmission à chaîne (3) est une pure transmission à chaîne, qui comprend au moins trois pignons (8, 6a-6c, 7a-7d), parmi lesquels au moins deux pignons (7a-7d) sont reliés pour former une, éventuellement deuxième, cassette de pignons (7), parmi lesquels un pignon (7a) est relié à un pignon (4a) de l'autre transmission (4), réalisée sous forme de transmission à chaîne, au moyen d'une autre chaîne (11).

5. Dispositif de filtration d'eau selon l'une des revendications 3 ou 4, **caractérisé en ce que** la transmission à chaîne (3) comprend deux cassettes à pignons (6, 7), comprenant chacune une pluralité de pignons (6a-6c, 7a-7d ou 7b-7d), parmi lesquelles la première cassette de pignons (6) comprend au moins deux pignons (6a-6c) pour ajuster le rapport de démultiplication avec l'ensemble de plateaux (K) pendant le trajet.

6. Dispositif de filtration d'eau selon la revendication 5, **caractérisé en ce que** la deuxième cassette de pignons (7) comprend au moins trois pignons (7a-7d ou 7b-7d), au moins deux pignons (7b-7d) étant prévus en dehors du pignon ou de la roue à courroie (7a), qui sert à actionner l'autre transmission (4), pour ajuster le rapport de démultiplication avec l'ensemble de plateaux (K) pendant le processus de filtration,
le pignon ou la roue à courroie (7a), qui sert à actionner la pompe volumétrique (1), étant éventuellement agencé(e) le plus près du flasque de rayon (12) dans la deuxième cassette de pignons (7)

7. Dispositif de filtration d'eau selon l'une quelconque des revendications 4 à 6, **caractérisé en ce que** le pignon (6a) solidaire avec le moyeu (9) de la roue arrière du vélo et destiné à entraîner la roue arrière du vélo ou une première cassette de pignons (6) peut être relié(e) solidairement à l'éventuelle deuxième cassette de pignons (7), qui repose sur la douille (10) libre de tourner sur le moyeu (9) au moyen d'au moins un élément de connexion (13), et **en ce que** lors de l'actionnement de la transmission (3), la pompe volumétrique (1) peut être actionnée également pendant le trajet, au moyen du pignon ou de la roue à courroie (7a) servant à actionner celle-ci, l'autre chaîne (11) et le pignon (4a) de l'autre transmission (4),
l'au moins un élément de connexion (13) consistant éventuellement en une ou plusieurs vis, qui peut/peuvent être passée(s) à travers de perçages (13a) respectifs, présents dans chaque pignon (6a-6c, 7a-7d), et être fixée(s) au moyen d'écrous.

8. Dispositif de filtration d'eau selon l'une quelconque des revendications 4 à 6, **caractérisé en ce que**
- la transmission à chaîne (3) comprend au moins un autre pignon (8) solidaire avec le moyeu (9) de la roue arrière du vélo et **en ce que** le dispositif comprend un deuxième mécanisme dérailleur, grâce auquel l'autre chaîne (11), qui sert à actionner l'autre transmission à chaîne (4), peut être déplacée entre le pignon (7a) de l'éventuelle deuxième cassette de pignons (7) et l'autre pignon (8) et **en ce que**
- lorsque la roue arrière du vélo est entraînée au moyen de la chaîne (5) et d'au moins un pignon (6a-6c) prévu à cet effet et faisant éventuellement partie d'une cassette de pignons (6), la pompe volumétrique (1) peut être actionnée en même temps, également pendant le trajet, au moyen de l'autre pignon (8), l'autre chaîne (11) et un pignon (4a) de l'autre transmission (4).

9. Dispositif de filtration d'eau selon la revendication 8, **caractérisé en ce que** l'autre pignon (8) servant à actionner la pompe volumétrique (1) est, parmi les pignons de la transmission à chaîne (3), celui agencé le plus près du flasque du rayon (12) pendant le trajet.

10. Dispositif de filtration d'eau selon l'une quelconque des revendications 1 à 9, **caractérisé en ce que** l'ensemble de plateaux (K) comprend au moins deux roues dentées [entspricht dies nicht den plateaux ?] et un dérailleur pour déplacer la chaîne du vélo (5) entre les au moins deux roues dentées pour ajuster le rapport de démultiplication avec les pignons (6a-6c, 7b-7d) ou cassettes de pignons (6, 7) sur la roue arrière.

11. Dispositif de filtration d'eau selon l'une quelconque des revendications 1 à 10, **caractérisé en ce que** la douille (10) reposant sur le moyeu (9) est libre de tourner au moyen d'un roulement à billes.

12. Dispositif de filtration d'eau selon l'une quelconque des revendications 1 à 11, **caractérisé en ce que** l'unité de filtration (2)
- est installée sur le porte-bagages au-dessus de la roue arrière du vélo ; ou
- dispose de deux roues (16) et est attachée au vélo sous forme de remorque ; ou
- est attachée au vélo de façon à pouvoir être pivotée entre ces deux positions au moyen d'une articulation (21).

13. Dispositif de filtration d'eau selon l'une quelconque des revendications 1 à 12, **caractérisé en ce que** la pompe volumétrique (1) comprend deux pistons directement liés entre eux.

14. Dispositif de filtration d'eau selon l'une quelconque des revendications 1 à 13, **caractérisé en ce que** la pompe volumétrique (1) comprend un système de récupération de pression, conçu pour
1) aspirer l'eau à filtrer à travers la soupape d'admission (V1) en même temps qu'il expulse l'eau usée par l'échappement (V5) et/ou
2) introduire l'eau à filtrer, préalablement aspirée, dans l'unité de séparation à membrane (14) par une soupape (V2) en même temps qu'il aspire du retentat de l'unité de séparation à membrane (14) à travers une soupape (V3)
lors de la même course du piston.

15. Dispositif de filtration d'eau selon l'une quelconque des revendications 1 à 14, **caractérisé en ce que** l'entrée de l'unité de séparation à membrane (14) pour l'eau à filtrer comprend un amortisseur d'impulsions (15).
